# EUROPEAN PATENT APPLICATION

(11) **EP 4 799 975 A1**
(43) Date of publication of application: **02.09.2026**
(21) Application number: 25160290.0
(22) Date of filing: 26.02.2025
(51) Int. Cl.: C01B 15/023

(54) **PROCESS FOR DISCHARGING OFFGAS FROM AN OXIDATION OF A WORKING SOLUTION IN THE PRODUCTION OF HYDROGEN PEROXIDE BY THE ANTHRAQUINONE PROCESS**

(71) Applicant: Solvay SA, 1120 Brussels (BE)
(72) Inventor: WILLSON, Andrew, 1120 Brussels (BE)
(74) Representative: Kraus & Lederer PartGmbB

(57) **Abstract**

The present invention relates to a process for discharging offgas from an oxidation of a working solution containing hydrogenated alkylanthraquinone (AQ) and/or hydrogenated alkyltetrahydroanthrahydroquinone (ATQ) by using an oxygen containing gas, wherein the temperature of the offgas is increased in two steps by subjecting it to a heat exchanger and to a steam heater, before the temperature and the pressure of the offgas are reduced in an turbo expander.

## Description

### TECHNICAL FIELD

The present invention relates to the field of hydrogen peroxide manufacture by the anthraquinone method, in particular to a process for discharging offgas from the oxidation of a working solution in this process.

### TECHNICAL BACKGROUND

Hydrogen peroxide is one of the most important inorganic chemicals to be produced worldwide. Its industrial applications include textile, pulp and paper bleaching, organic synthesis (propylene oxide), the manufacture of inorganic chemicals and detergents, environmental and other applications.

Synthesis of hydrogen peroxide is predominantly achieved by using the large scale Riedl-Pfleiderer process, also called anthraquinone (loop) process or AO (auto-oxidation) process. The process is a cyclic process taking an organic anthraquinone dissolved in solvent and circulating this "Working Solution" (WS) mix around the plant.

The first step of the AO process is the chemical reduction of the anthraquinone derivatives present in the organic working solution using hydrogen gas and a catalyst. The mixture of organic solvents, hydroquinone and quinone species is then separated from the catalyst and the hydroquinone species are oxidized using oxygen, air or oxygen-enriched air thus regenerating the quinone(s) with simultaneous formation of hydrogen peroxide.

Hydrogen peroxide is then typically extracted in an extraction column with water and recovered in the form of a crude aqueous hydrogen peroxide solution, and the working solution is returned to the hydrogenator to complete the loop. Improved modifications of the hydrogen peroxide autoxidation process are disclosed for instance in WO 2023/117360 A1 and WO 2024/132319 A1.

In a typical set-up, the process of manufacturing hydrogen peroxide by the anthraquinone method comprises a step of oxidizing a hydrogenated working solution, e.g. oxidizing the hydroquinone species using oxygen, air or oxygen-enriched air thus regenerating quinones with simultaneous formation of hydrogen peroxide. To accelerate the oxidation, typically, the oxygen containing gas (e.g. oxygen, air or oxygen-enriched air) is compressed using a compressor into a hot compressed oxygen containing gas before entering the oxidiser. Thus, the offgas coming from the oxidiser is compressed; typically, the discharge pressure of the oxidizer is around 5 to 6 bar gauge. Before this offgas can be discharged, the pressure needs to be reduced by expanding the offgas, typically in a turbo expander (TE). During expansion, the temperature of the offgas decreases, often to temperatures < 0°C which leads to freezing problems in the apparatus. Thus, before subjecting the offgas to the TE, an extra heater is installed and/or a control valve is included in the TE. However, the use of an extra heater means that additional energy needs to be supplied to the system and the use of a control valve means that the energy contained in the compressed offgas is wasted as this throttling valve reduces pressure without energy recovery.

To overcome the problem of wasted energy, WO 2023/036775 describes the use of a turbo-expander driven by the tail-gases from the oxidiser of a hydrogen peroxide plant to generate power. According to this patent application, a cross exchanger is used to preheat the feed gases to the turbo-expander using the heat of compression of the gases compressed to feed into the oxidiser, these being hot due to the energy inputted by the air compressor. However, also for this set-up, a regulating valve on the gas line before or after the turbo expander is required. Otherwise, the gases exiting the turbo expander will drop below zero degrees °C and cause the pipework to freeze up and block with ice. If a regulating valve is added to the offgas line before or after the turbo-expander it will prevent the freezing of the gas, but it will also reduce the power offtake of the turbo-expander.

Thus, there remains a need for an improved process and system which avoids the freezing of the gas and at the same time improves the power output of the turbo-expander.

### SUMMARY OF THE INVENTION

The present inventors have found that the addition of a steam heater before the turbo expander significantly increases the power output of the turbo expander. This is achieved by a process for discharging offgas from an oxidation of a working solution containing hydrogenated alkylanthraquinone (AQ) and/or hydrogenated alkyltetrahydroanthrahydroquinone (ATQ) by using an oxygen containing gas, comprising the steps:
a. Collecting the offgas from an oxidiser (1) in which the oxidation is carried out, the collected offgas having a temperature T and a pressure P;
b. Increasing the temperature T of the collected offgas by:
   i. First, subjecting it to a heat exchanger (2), thereby increasing its temperature to T1 higher than T, and
   ii. Then, subjecting it to a steam heater (3), to obtain a hot offgas having a temperature T2 higher than T1,
c. Reducing the temperature and the pressure of the hot offgas in an turbo expander (4), to obtain a dischargeable offgas having a temperature T3 lower than T, and a pressure P1 lower than P, and to generate electrical power,
d. Optionally, subjecting the dischargeable offgas to other steps before discharging it.

Thus, in addition to the cross-exchanger described in WO 2023/036775, the present process uses a steam heater between the cross exchanger and the turbo expander to add additional heat to the gases which will be expanded. This steam pre-heater effectively allows the turbo expander to convert thermal energy in the form of steam into electrical power. This conversion is advantageous because the monetary value of electrical power is typically about 2.5 times the monetary value of thermal power.

The process of the invention can convert thermal energy into reduced electrical power consumption by enabling the turbo expander to extract more energy and in turn, the energy provided by the turbo expander can either reduce the compressor motor power if the turbo expander is attached to the compressor or the turbo expander energy can be connected to an independent electrical generator. Further, the use of the additional steam heater makes use of a regulating value on the gas line before or after the turbo expander redundant.

### DETAILED DESCRIPTION OF THE INVENTION

Before the method of the invention will be described in detail, it is to be understood that this invention is not limited to specific method conditions described herein, since such conditions may, of course, vary.

It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise. By way of example, "a compound" means one compound or more than one compound.

The terms "containing", "contains" and "contained of" as used herein are synonymous with "including", "includes" or "comprising", "comprises", and are inclusive or open-ended and do not exclude additional, non-recited members, elements or method steps. It will be appreciated that the terms "containing", "contains", "comprising", "comprises" and "comprised of" as used herein comprise the terms "consisting of", "consists" and "consists of".

Throughout this application, the term "about" is used to indicate that a value includes the standard deviation of error for the device or method being employed to determine the value.

As used herein, the term "average" refers to number average unless indicated otherwise.

As used herein, the terms "% by weight", "wt.-%", "weight percentage", or "percentage by weight" are used interchangeably. The same applies to the terms "% by volume", "vol.- %", "vol. percentage", or "percentage by volume", or "% by mol", "mol- %", "mol percentage", or "percentage by mol".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different alternatives, embodiments and variants of the invention are defined in more detail. Each alternative and embodiment so defined may be combined with any other alternative and embodiment, and this for each variant unless clearly indicated to the contrary or clearly incompatible when the value range of a same parameter is disjoined. In particular, any feature indicated as being preferred or advantageous may be combined with any other feature or features indicated as being preferred or advantageous.

Furthermore, the particular features, structures or characteristics described in present description may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and from different embodiments, as would be understood by those in the art.

Should the disclosure of any patents, patent applications, and publications which are incorporated herein by reference conflict with the description of the present application to the extent that it may render a term unclear, the present description shall take precedence.

### Definitions

A "demister" is is a device used to remove liquid droplets or mist from gas streams.

"Gauge pressure": In this application, pressure values are indicated as gauge pressure, i.e. relative to atmospheric pressure, with the unit bar gauge (barg).

Gauge pressure (barg) can be converted to absolute pressure (bar) by the following equation: P_{absolute} = P_{gauge} + P_{atmospheric}.

A "heat exchanger", also called "cross exchanger" is a device designed to transfer heat between two or more fluids (liquids, gases, or a combination) without mixing them. In the process of the present invention, the heat exchanger cross-exchanges heat by using the heat of compressed gases for preheating the gases for the turbo expander. The heat exchanger is preferably a shell-and-tube heat exchanger, a finned tube heat exchanger or a plate heat exchanger.

A shell-and-tube heat exchanger consists of a shell with a bundle of tubes inside. Two fluids at different temperatures flow through the heat exchanger. One of the fluids flows through the tube side and the other fluid flows outside the tubes, but inside the shell.

A finned tube heat exchanger enhances the heat transfer surface area using extended fins attached to the outside of the tubes. These fins are typically made of materials with high thermal conductivity, like aluminium or copper.

A plate heat exchanger contains an amount of thin shaped heat transfer plates bundled together.

A "steam heater" is a device that uses steam as a heat source to transfer thermal energy for heating purposes.

A "turbo expander", also referred to as a turbo-expander or an expansion turbine, is a device used to extract energy from the expansion of compressed gases. It is a centrifugal or axial-flow turbine, through which a high-pressure gas is expanded to produce work that is often used to drive a compressor or generator. In the present invention, preferably, the turbo expander is an axial and/or radial turbo-expander.

An axial turbo-expander is a type of expander where the gas flows parallel to the axis of the rotor.

A radial turbo-expander is a type of expander where the gas flows radially inward or outward relative to the rotor's center.

### Figures

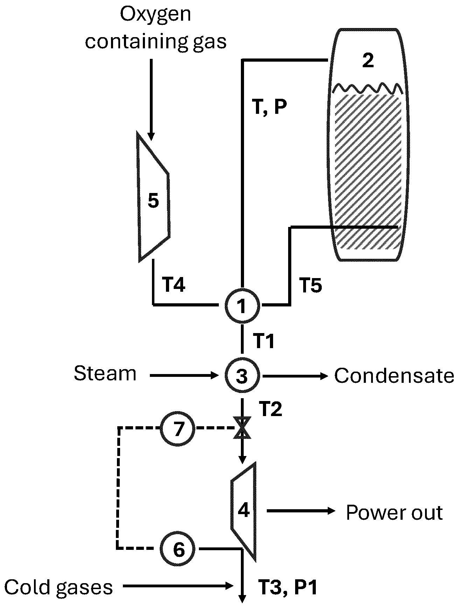

Figure 1 illustrates the inventive process. A oxygen containing is compressed in a compressor (5) into a hot compressed oxygen containing gas of temperature T4. The hot compressed oxygen containing gas is subjected to a heat exchanger (2), thereby reducing its temperature to T5. Next, the gas is subjected to an oxidiser (1) in which the oxidation is carried out. The offgas from the oxidizer (1) is collected and has a temperature T and a pressure P. The collected offgas is subjected to the heat exchanger (2), thereby increasing its temperature to T1. Next, the offgas is subjected to a steam heater (3), to obtain a hot offgas having a temperature T2. Then, the hot offgas is subjected to a turbo expander (4), to obtain a dischargeable offgas having a temperature T3 and a pressure P1. Optionally, the gas can be subjected to a demister (6) installed before or after the turbo expander (4) to remove liquid droplets or mist from the gas. Optionally, the gas can be subjected to an inlet guide vane (7), a control valve installed before the turbo expander (4), to further reduce the pressure of the gas.

### Process for discharging offgas

The present invention provides a process for discharging offgas from an oxidation of a working solution containing hydrogenated alkylanthraquinone (AQ) and/or hydrogenated alkyltetrahydroanthrahydroquinone (ATQ) by using an oxygen containing gas, comprising the steps:
a. Collecting the offgas from an oxidiser (1) in which the oxidation is carried out, the collected offgas having a temperature T and a pressure P;
b. Increasing the temperature T of the collected offgas by:
   i. First, subjecting it to a heat exchanger (2), thereby increasing its temperature to T1 higher than T, and
   ii. Then, subjecting it to a steam heater (3), to obtain a hot offgas having a temperature T2 higher than T1,
c. Reducing the temperature and the pressure of the hot offgas in an turbo expander (4), to obtain a dischargeable offgas having a temperature T3 lower than T, and a pressure P1 lower than P, and to generate electrical power,
d. Optionally, subjecting the dischargeable offgas to other steps before discharging it.

The "other steps" according to step d. encompass any steps the skilled person can employ when discharging an offgas. For instance, the temperature of the offgas can be further adjusted by using a heating or cooling unit. Further, the offgas can be filtered in a filtering unit. In many cases, the offgas is subjected to a solvent recovery unit, e.g. an activated carbon bed.

Preferably, in the inventive process, the oxygen containing gas, before entering the oxidiser (1), has first been, in a step e), compressed in a compressor (5) into a hot compressed oxygen containing gas of temperature T4 higher than T, and then subjected to the heat exchanger (2) used in step b.i), thereby reducing its temperature to T5 lower than T4. Preferably, from 2 to 5 compression stages are used in step e), and more preferably 3 or 4 compression stages. Preferably, at least one cooler is used between the compression stages. The cooler reduces the temperature to a suitable value since a very high temperature can damage the compressor. When more than one compressor is used, each of the compressors may have several compression stages.

In other words, the inventive process preferably comprises the following steps:
e. Preparing the oxygen containing gas for oxidation by:
   i. compressing the oxygen containing gas in a compressor (5) into a hot compressed oxygen containing gas of temperature T4 higher than T, and
   ii. subjecting the hot compressed oxygen containing gas to the heat exchanger (2) used in step b.i), thereby reducing its temperature to T5 lower than T4,
f. Performing the oxidation in the oxidiser (1), and
   steps a. to d. as described above.

Preferably, the temperature T is from 30°C to 70°C, the temperature T1 is from 30°C to 160°C, the temperature T2 is from 100°C to 250°C, the temperature T3 is from -3°C to 20°C, the pressure P is higher than 1 barg and up to 10 barg, and the pressure P1 is from 0 barg to 3 barg. Preferably, the temperature T4 is from 100°C to 200°C and the temperature T5 is from 20 to 80°C. For instance, in a typical set-up, the temperatures can have approximately the following values: T = 50°C, T1 = 100°C, T2 = 160°C, T3 = 3°C, T4 = 120°C, T5 = 60°C.

Preferably, the turbo expander used in step c) is an axial and/or radial turbo-expander.

Preferably, the offgas is taken from the upper area of the oxidiser and the oxygen containing gas is introduced in the lower area of the oxidiser. Preferably, the oxidiser is fed with the oxygen containing gas in such an amount that the headspace contains more than 0 vol% and up to 10 vol% of oxygen, in particular from 1 to 4 vol% of oxygen. The structure and function of a suitable oxidiser is known to the skilled person.

Preferably, the power generated in step c) is driving a generator or the compressor in step e). In other words, the turbo expander can either be connected directly to the compressor or can be connected to a generator. Thus, the energy produced by the turbo expander can be used to generate electricity or the energy can be used directly in the process for driving the compressor.

The energy introduced into the steam heater is thermal power in the form of steam. The energy generated by the turbo expander can be used to generate electricity, i.e. electrical power. Thermal power is disadvantageous over electrical power for economic reasons, because typically, the value of electrical power is approximately 2.5 times higher than the value of thermal power. Thus, the inventive process allows for a conversion of thermal power into electrical power.

Therefore, the inventive process is advantageous in comparison to prior art processes which do not use a steam heater for the following reasons: First, without adding the steam heater to the gas feed to the turbo expander, the turbo expander can block up with ice when in operation as its temperature could fall below zero degrees Celsius. The inventive process avoids these freezing problems without the need to use a control valve in the turbo expander, leading to a more energy efficient process. Further, as is shown in the examples below, by using the inventive method with a steam heater, power generated from the turbo expander is significantly increased. Thus, adding the steam heater allows the conversion of thermal power in the form of steam into work in the form of electrical power with high efficiency.

Optionally, the gas can be subjected to an inlet guide vane (IGV, 7) before it is subjected to the turbo expander (4). The IGV is a sort of regulating valve across which some pressure can be dropped. The position of the IGV is often controlled by the exit temperature of the turbo expander to avoid freezing. The IGV can be used to adjust the gas amount to the turbo expander, which is usually designed to expand a specific amount of gas.

Optionally, the gas can be subjected to a demister (6). The demister can be installed before or after the turbo expander (4). Thus, the gas can be subjected to the demister before or after subjecting it to the turbo expander. The demister removes liquid droplets or mist from the gas. When the demister is installed before the turbo expander, droplet formation in the turbo expander can be avoided which can lead to damage of the turbo expander.

The inventive process is not limited to a process comprising subjecting the oxygen containing gases to a single compressor or comprising subjecting the offgas to a single heat exchanger and/or a single turbo expander. The inventive process can also be performed with two or more compressors and/or two or more heat exchangers and/or two or more turbo expanders. Thus, terms as "a heat exchanger", "a turbo expander" or "a compressor" are to be understood to encompass "at least one heat exchanger", "at least one turbo expander" and "at least one compressor". Thus, the respective process steps can be performed one or multiple times.

The invention also relates to a facility for producing hydrogen peroxide by the anthraquinone method and for discharging offgases, comprising a compressor (5), a heat exchanger (2), an oxidiser (1), a steam heater (3), and a turbo expander (4) as described for the inventive process. Optionally, the facility can comprise a demister (6) and/or an inlet guide vane (7) as described for the inventive process.

### Process for producing hydrogen peroxide

Preferably, in the inventive process, the oxidation is part of an anthraquinone process for producing hydrogen peroxide, wherein anthraquinone is subjected to a cycle of process steps, each cycle comprising hydrogenating the anthraquinone into hydrogenated anthraquinone (see step ii) below), oxidizing the hydrogenated anthraquinone to reform the anthraquinone and to generate hydrogen peroxide (see step iv) below), extracting the hydrogen peroxide (see step v) below), and recycling the anthraquinone to the hydrogenation step (see step vii) below), and wherein the anthraquinone contains AQ and/or ATQ.

Thus, the present invention also relates to a process for producing hydrogen peroxide by the anthraquinone method comprising steps of discharging offgas from the oxidation of the working solution. In a typical set-up, the process of manufacturing hydrogen peroxide by the anthraquinone method comprises the following steps:
i) Preparing a working solution, typically an organic working solution, preferably by dissolving an anthraquinone compound in a solvent, more preferably by dissolving an anthraquinone compound in a solvent mixture comprising at least one aromatic solvent and at least one polar solvent. Preferably, the anthraquinone contains AQ and/or ATQ.
ii) Hydrogenating the working solution, e.g. chemically reducing the anthraquinone derivatives present in the working solution using hydrogen gas and a catalyst.
iii) Optionally, separating the mixture of organic solvents, hydroquinone and quinone species from the catalyst.
iv) Oxidizing the hydrogenated working solution, e.g. oxidizing the hydroquinone species using oxygen, air or oxygen-enriched air thus regenerating the quinone(s) with simultaneous formation of hydrogen peroxide.
v) Extracting hydrogen peroxide from the oxidized working solution, e.g. in an extraction column with water.
vi) Optionally, recovering hydrogen peroxide in the form of a crude aqueous hydrogen peroxide solution.
vii) Optionally, returning the working solution to the hydrogenator.

### The working solution

Preferably, the working solution contains a solvent mixture comprising at least one aromatic solvent and at least one polar solvent.

Preferably, the aromatic solvent is chosen from C6-C11 aromatic hydrocarbon petroleum fractions, naphthalene, alkyl derivatives of naphthalene, alkyl-benzenes and anisole, and preferably chosen from 1-methyl-2-propylbenzene, 1-methyl-3-propylbenzene, 1-methyl-4-propylbenzene, monomethyl- and dimethyl-substituted naphthalene. Preferably, the polar solvent is chosen from secondary aliphatic alcohols, primary aliphatic alcohols and cycloaliphatic alcohols having at least 6 carbon atoms, ketones and aliphatic or cycloaliphatic esters of carboxylic acid or phosphoric acid, and preferably is chosen from diisobutyl carbinol, ortho methyl cyclohexane acetate, tri octyl phosphate and tetra butyl urea.

Preferably, the solvent mixture comprises from 60 to 90 wt% of the aromatic solvent and from 10 to 40 wt% of the polar solvent, based on the weight of the solvent mixture.

Preferably, the anthraquinone contains AQ and/or ATQ. Preferably, the alkyl group in the AQ and/or ATQ is a C2-C10 alkyl, preferably C2-C5 alkyl, more preferably ethyl (C2) and/or amyl (C5).

### EXAMPLES

In the following, the inventive process will be described in more detail by way of non-limiting examples.

### Comparative Example 1: Installation without steam heater

Air is compressed in a compressor to compressed air with temperature T4. Temperature T4 is reduced in a heat exchanger to temperature T5 and then, the offgas is subjected to an oxidizer, where the compressed air is used for the oxidation of a working solution containing hydrogenated alkylanthraquinone (AQ) and/or hydrogenated alkyltetrahydroanthrahydroquinone (ATQ). The offgas from the oxidizer is collected and has a temperature T and a pressure P. The collected offgas is subjected to a heat exchanger, where its temperature is increased to T1. Next, the hot offgas is subjected to a turbo expander, where its temperature and pressure is reduced to T3 and P1. The apparatus comprises an inlet guide vane and a throttling valve. The power generated from the turbo expander is determined. The conditions during the process are as follows:
- Air flow from compressor (5): Compressor air flow 26300 scfm.
- Final stage outlet temperature (T4) from compressor: **T4 =104°C** (220 Degrees F)
- Offgas temperature (T) from oxidizing column (oxidiser): **T = 54°C** (129 Degrees F)
- Exit temperature from the cross exchanger (2) for both the air going to the oxidizing column (1), i.e. temperature T5, and the offgas heading to the TE (4), i.e. temperature T1: **T1 and T5 not determined**
- Head pressure of oxidizing column (1): **P** = **6.1 barg** (88 psig)
- Pressure before (P, entering) and after (P1, exiting) the TE (4) (There might be a throttling valve on the line after the TE (4) so the discharge pressure might not be atmospheric pressure): **P = 6.1 barg** (88 psig) and **P1 = 1.5 barg** (22 psig)
- Inlet guide vane (IGV, 7) position: 76%
- Throttling valve position: Demister (6) outlet pressure control valve position 20%
- Outlet temperature (T3) from the TE (4): **T3 = 16°C** (60 Degrees F)
- Power generated from the TE (4): **706 kW**

### Example 1: Inventive Installation with steam heater

Example 1 was performed in the same way as Comparative Example 1 with the exception that a steam heater is installed after the heat exchanger, where the temperature of the offgas is increased to T2 before subjecting the offgas to the TE. The power generated from the turbo expander is determined. The conditions during the process are as follows:
- Air flow from compressor (5): Compressor air flow 26300 scfm.
- Final stage outlet temperature (T4) from compressor: **T4 =104°C** (220 degree F)
- Offgas temperature (T) from oxidizing column (1): **T** = **32°C** (90 Degrees F)
- Exit temperature from the cross exchanger (2) for both the air going to the oxidizing column (1), i.e. temperature T5, and the offgas heading to the TE (4), i.e. temperature T1: **T1 = 35°C** (95 Degrees F), **T5= 35°C** (95 Degrees F)
- Exit temperature T2 from the steam heater (3) once it was added on the gasses going to the TE: **T2 = 118°C** (245 degrees F)
- Head pressure of oxidizing column (1): **P = 5.5 barg** (80 psig)
- Pressure before (P, entering) and after (P1, exiting) the TE (4) (There might be a throttling valve on the line after the TE (4) so the discharge pressure might not be atmospheric pressure): **P = 5.5 barg** (80 psig) and **P1 = 0.55 barg** (8 psig)
- Inlet guide vane position. (85%)
- Throttling valve position: Demister (6) outlet pressure control valve position 40%
- Outlet temperature (T3) from the TE (4): **T3 = 12°C** (53 Degrees F)
- Power generated from the TE (4): **1217 kW**

The conditions of Example 1 and Comparative Example 1 are summarized in the following table:

| **Ex.** | **T** | **P** | **T1** | **T2** | **T3** | **P1** | **T4** | **T5** | **Power** |
|---|---|---|---|---|---|---|---|---|---|
| | °C | barg | °C | °C | °C | barg | °C | °C | kW |
| Comp. Ex. 1 | 54 | 6.1 | * | n.a. | 16 | 1.5 | 104 | * | 706 |
| Ex. 1 | 32 | 5.5 | 35 | 118 | 12 | 0.55 | 104 | 35 | 1217 |

| | | | | | | | | | |
|---|---|---|---|---|---|---|---|---|---|
| * T1 and T5 were not determined in Comparative Example 1. | | | | | | | | | |

The examples show that, by using the inventive method with a steam heater, power generated from the turbo expander is significantly increased by 72%. Therefore, the addition of the steam heater allows the efficient conversion of thermal power in the form of steam into work in the form of electrical power.

## Claims

1. Process for discharging offgas from an oxidation of a working solution containing hydrogenated alkylanthraquinone (AQ) and/or hydrogenated alkyltetrahydroanthrahydroquinone (ATQ) by using an oxygen containing gas, comprising the steps:
a. Collecting the offgas from an oxidiser (1) in which the oxidation is carried out, the collected offgas having a temperature T and a pressure P;
b. Increasing the temperature T of the collected offgas by:
i. First, subjecting it to a heat exchanger (2), thereby increasing its temperature to T1 higher than T, and
ii. Then, subjecting it to a steam heater (3), to obtain a hot offgas having a temperature T2 higher than T1,
c. Reducing the temperature and the pressure of the hot offgas in an turbo expander (4), to obtain a dischargeable offgas having a temperature T3 lower than T, and a pressure P1 lower than P, and to generate electrical power,
d. Optionally, subjecting the dischargeable offgas to other steps before discharging it.

2. The process of claim 1, wherein the temperature T is from 30°C to 70°C, the temperature T1 is from 30°C to 160°C, the temperature T2 is from 100°C to 250°C, the temperature T3 is from -3°C to 20°C, the pressure P is higher than 1 barg and up to 10 barg, and the pressure P1 is from 0 barg to 3 barg.

3. The process of claim 1 or 2, wherein the oxygen containing gas, before entering the oxidiser (1), has first been, in a step e), compressed in a compressor (5) into a hot compressed oxygen containing gas of temperature T4 higher than T, and then subjected to the heat exchanger (2) used in step b.i), thereby reducing its temperature to T5 lower than T4.

4. The process of claim 3, wherein the temperature T4 is from 100°C to 200°C and the temperature T5 is from 20 to 80°C.

5. The process of any of claims 1 to 4, wherein the oxidation is part of an anthraquinone process for producing hydrogen peroxide, wherein anthraquinone is subjected to a cycle of process steps, each cycle comprising hydrogenating the anthraquinone into hydrogenated anthraquinone, oxidizing the hydrogenated anthraquinone to reform the anthraquinone and to generate hydrogen peroxide, extracting the hydrogen peroxide, and recycling the anthraquinone to the hydrogenation step, and wherein the anthraquinone contains AQ and/or ATQ.

6. The process of any of claims 1 to 5, wherein the turbo expander (4) used in step c) is an axial and/or radial turbo-expander.

7. The process of any of claims 1 to 6, wherein the working solution contains a solvent mixture comprising at least one aromatic solvent and at least one polar solvent.

8. The process of claim 7, wherein the aromatic solvent is chosen from C6-C11 aromatic hydrocarbon petroleum fractions, naphthalene, alkyl derivatives of naphthalene, alkyl-benzenes and anisole, and preferably chosen from 1-methyl-2-propylbenzene, 1-methyl-3-propylbenzene, 1-methyl-4-propylbenzene, monomethyl- and dimethyl-substituted naphthalene, and wherein the polar solvent is chosen from secondary aliphatic alcohols, primary aliphatic alcohols and cycloaliphatic alcohols having at least 6 carbon atoms, ketones and aliphatic or cycloaliphatic esters of carboxylic acid or phosphoric acid, and preferably is chosen from diisobutyl carbinol, ortho methyl cyclohexane acetate, tri octyl phosphate and tetra butyl urea.

9. The process of claim 7 or 8, wherein the solvent mixture comprises from 60 to 90 wt% of the aromatic solvent and from 10 to 40 wt% of the polar solvent, based on the weight of the solvent mixture.

10. The process of any of claims 1 to 9, wherein the alkyl group in the AQ and/or ATQ is a C2-C10 alkyl, preferably C2-C5 alkyl, more preferably ethyl and/or amyl.

11. The process of any of claims 1 to 10, wherein the offgas is taken from the upper area of the oxidiser (1) and the oxygen containing gas is introduced in the lower area of the oxidiser (1).

12. The process of claim 11, wherein the oxidiser (1) is fed with the oxygen containing gas in such an amount that the headspace contains more than 0 vol% and up to 10 vol% of oxygen, in particular from 1 to 4 vol% of oxygen.

13. The process of any of claims 3 to 12, wherein the power generated in step c) is driving a generator or the compressor (5) in step e).

14. The process of any of claims 3 to 13, wherein from 2 to 5 compression stages are used in step e), and preferably 3 or 4 compression stages.

15. The process of claim 14, wherein at least one cooler is used between the compression stages.
